Europäisches Patentamt

European Patent Office

Office européen des brevets

(11) Veröffentlichungsnummer: **0 174 686 B1**

(12) **EUROPÄISCHE PATENTSCHRIFT**

(45) Veröffentlichungstag der Patentschrift: 13.03.91

(51) Int. Cl.5: **G01K 7/00**

(21) Anmeldenummer: **85201359.8**

(22) Anmeldetag: **28.08.85**

(54) **Halbleiter-Temperatursensor.**

(30) Priorität: 30.08.84 DE 3431811

(43) Veröffentlichungstag der Anmeldung:
**19.03.86 Patentblatt 86/12**

(45) Bekanntmachung des Hinweises auf die
Patenterteilung:
**13.03.91 Patentblatt 91/11**

(84) Benannte Vertragsstaaten:
**DE FR GB IT NL**

(56) Entgegenhaltungen:
**EP-A- 0 065 133**
**EP-A- 0 095 658**

**IBM TECHNICAL DISCLOSURE BULLETIN,
Band 24, Nr. 9, Februar 1982, Seiten
4767-4771, New York, US; F.H. DE LA MONE-
DA et al.: "High breakdown voltage junction
for protective device in polysilicon recessed
oxide technology"**

**ELECTRONICS INTERNATIONAL, Band 55, Nr.
9, 5. Mai 1982, Seiten 73,74, New York, US; J.
GOSCH: "Temperature range of silicon sensors tops 350 degrees C mark"**

**A. Petersen "Silicon Temperature Sensors",**

Electronic Components and Applications,
vol. 5, no. 4, Sept. 1983, pages 206-207

(73) Patentinhaber: **Philips Patentverwaltung
GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR GB IT NL**

(72) Erfinder: **Zeile, Heinrich, Dr.**
**Keplerstrasse 10**
**W-2000 Hamburg 50(DE)**
Erfinder: **Witt, Hartmut**
**Dirkenhof 3E**
**W-2105 Seevetal 2(DE)**

(74) Vertreter: **David, Günther M. et al**
**Philips Patentverwaltung GmbH Wendenstrasse 35 Postfach 10 51 49**
**W-2000 Hamburg 1(DE)**

**Beschreibung**

Die Erfindung betrifft einen Temperatursensor in Form eines temperaturabhängigen, nach dem Stromausbreitungsprinzip arbeitenden Halbleiterwiderstandes mit einem Halbleiterkörper vom einen Leitungstyp aus Silicium, der an seiner Unterseite mit einer gut leitenden Schicht und an seiner mit einer Siliciumoxidschicht oder Siliciumnitridschicht bedeckten Oberseite mit mindestens einer Kontaktzone vom einen Leitungstyp versehen ist.

Ein Halbleiter-Temperatursensor dieser Art ist z.B. bekannt aus Electronic Components and Applications Vol. 5 (September 1983) No. 4, Seiten 206 und 207.

Aus der EP 095 658 A3 ist es bekannt, die Durchbruchspannung von PN-Übergängen bei Planarstrukturen dadurch zu erhöhen, daß eine an der von einer Isolierschicht bedeckten Oberseite des Halbleiterkörpers vom ersten Leitungstyp angeordnete Zone vom zweiten Leitungstyp ringförmig von weiteren Zonen vom gleichen (zweiten) Leitungstyp umgeben ist.

Ebenfalls zum Erhöhen der Durchbruchspannung einer Schutzdiode für MOS-Schaltungen ist es aus IBM TDB 24(1982)9, 4767-4771 bekannt, eine an der von einer Isolierschicht bedeckten Oberseite des Halbleiterkörpers vom ersten Leitungstyp angeordneten tiefen Zone vom zweiten Leitungstyp von einer flachen, niedriger dotierten ringförmigen Zone vom gleichen Leitungstyp und diese von einer hochdotierten Zone vom ersten Leitungstyp zu umgeben.

An Temperatursensoren wird in der Regel die Forderung gestellt, daß sich ihr Widerstand bei einer bestimmten Temperatur über ihre Lebensdauer möglichst wenig ändert, sie also nur eine geringe Alterung aufweisen.

Weiter ist es wünschenswert, daß nur eine geringe Exemplarstreuung des Temperaturkoeffizienten auftritt.

Bei den bekannten Halbleiter-Temperatursensoren sind die genannten Eigenschaften (Alterung und Streuung des Temperaturkoeffizienten) nicht immer befriedigend.

Der Erfindung liegt daher die Aufgabe zugrunde, einen Temperatursensor der eingangs genannten Art so auszubilden, daß der vorgegebene Widerstandswert besser eingehalten wird und der Temperaturkoeffizient nur eine geringe Streuung aufweist.

Diese Aufgabe wird erfindungsgemäß dadurch gelöst, daß der Halbleiterkörper an seiner der Siliciumoxidschicht oder Siliciumnitridschicht benachbarten Oberfläche mit einer Oberflächenzone vom anderen, entgegengesetzten Leitungstyp versehen ist.

Bei einem erfindungsgemäß ausgebildeten Temperatursensor sind die alterungsbedingte Widerstandsänderung und die Exemplarstreuung des Temperaturkoeffizienten wesentlich verringert.

Dies wird darauf zurückzuführen sein, daß die Siliciumoxidschicht bzw. Siliciumnitridschicht auf der Oberseite des Halbleiterkörpers normalerweise positive Ladungen trägt, deren Anzahl und Beweglichkeit nicht reproduzierbar sind. Unter dem Einfluß dieser Ladungen werden in dem Halbleiterkörper an der Oberfläche Elektronen angereichert, die den spezifischen Widerstand und auch den Temperaturkoeffizienten beeinflussen.

Durch die erfindungsgemäß vorgesehene Oberflächenzone vom anderen, entgegengesetzten Leitungstyp wird der Einfluß dieser unvermeidbaren Ladungen in der Oxid- bzw. Nitridschicht wesentlich reduziert. Weiter wird auch erreicht, daß die Einstellung des Widerstandes des Sensors bei der Herstellung nicht durch die genannten Oberflächenladungen gestört wird.

Weitere Ausgestaltungen der Erfindung ergeben sich aus den Unteransprüchen.

Danach kann die Oberflächenzone entweder durch Diffusion im Halbleiterkörper oder durch Aufbringen einer epitaktischen Schicht gebildet werden.

Die Erfindung wird im folgenden anhand der beigefügten Zeichnung an zwei Ausführungsbeispielen näher erläutert. Es zeigen:

Fig. 1 einen Schnitt durch einen Einloch-Temperatursensor mit einer durch Diffusion im Halbleiterkörper erzeugten Oberflächenzone und

Fig. 2 einen Schnitt durch einen Zweiloch-Temperatursensor mit einer Oberflächenzone in Form einer epitaktischen Schicht.

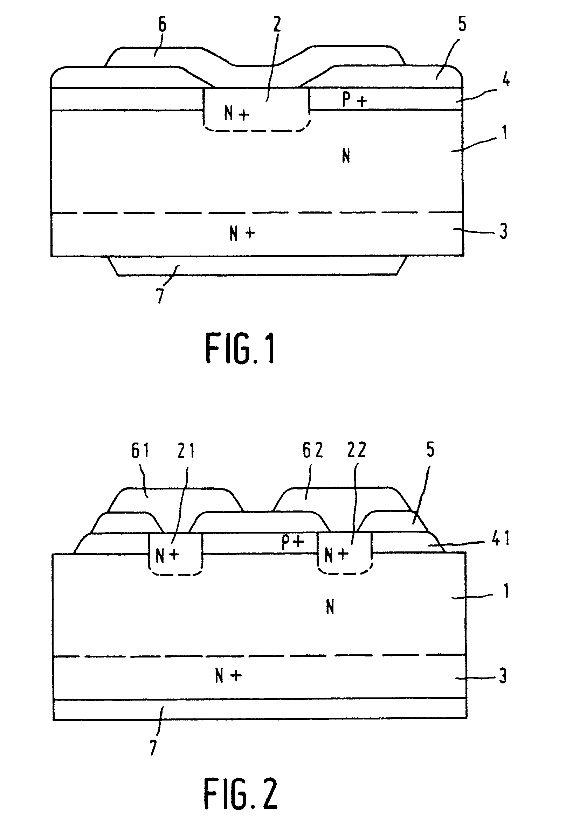

Die Figuren 1 und 2 sind nicht maßstäblich gezeichnet; insbesondere die Abmessungen in Dickenrichtung sind der Anschaulichkeit halber stark übertrieben.

Die Figur 1 zeigt einen Schnitt durch einen erfindungsgemäßen Temperatursensor, der aus einem Halbleiterkörper 1 aus Silicium besteht, der an seiner Oberseite mit einer eindiffundierten, n+-leitenden Kontaktzone 2 "punktförmig" und an seiner Unterseite mit einer ebenfalls eindiffundierten, n+-leitenden Kontaktzone 3, die sich über die gesamte Oberfläche erstreckt, großflächig kontaktiert ist. Die beiden Kontaktzonen 2 und 3 sind mit Anschlußelektroden 6 bzw. 7 versehen.

Die die punktförmige Kontaktzone 2 tragende Oberseite des Halbleiterkörpers ist mit einer Siliciumoxidschicht 5 abgedeckt, unter der sich aber eine in die Oberfläche des Halbleiterkörpers 1 eingebrachte p-leitende Schicht 4 befindet. Diese bildet eine Oberflächenzone vom entgegengesetzten Leitungstyp und verhindert, daß die unvermeidbaren Ladungen in der Oxidschicht 5 die Eigenschaften des Temperatursensors nachteilig beeinflussen.

Ein so aufgebauter Temperatursensor kann wie folgt hergestellt werden:

Ausgegangen wird von einer Scheibe aus n-leitendem Silicium mit einem spezifischem Widerstand von 5 Ω cm mit einer Dicke von 240μm. Die Scheibe wird dann thermisch mit einer Oxidschicht von etwa 0,2μm Dicke versehen in die dann ganzflächig Bor mit einer Dosis von etwa 1 bis 8x10$^{15}$ cm$^{-2}$ implantiert wird. Anschließend wird ein pyrolythisches Oxid aufgebracht, so daß die Gesamtdicke der Oxidschicht etwa 0,8 bis 1μm beträgt.

Anschließend werden dann in die Oxidschicht runde Fenster von etwa 30μm 0 eingeätzt und anschließend über 100 min bei 1100°C Phosphor in die Scheibe diffundiert, so daß auf der Oberseite die n+-leitende Kontaktzone 2 und an der Unterseite die ebenfalls n+leitende Kontaktzone 3 bilden. Beide Zonen haben eine Dicke von etwa 4μm. Gleichzeitig mit der Eindiffusion des Phosphors diffundiert auch das implantierte Bor in die Oberseite des Halbleiterkörpers und bildet so die p+leitende Oberflächenzone 4.

Anschließend werden auf beide Seiten des Halbleiterkörpers dann noch die Kontaktelektroden 6 und 7 durch Sputtern aufgebracht, die z.B. aus einer Titan-Wolfram-Schicht von 0,4μm Dicke und einer Goldschicht von 0,6μm Dicke bestehen.

Die Halbleiterscheibe wird dann in die einzelnen Bauelemente unterteilt und diese in geeigneten Gehäusen montiert.

Die Figur 2 zeigt einen Schnitt durch ein weiteres Ausführungsbeispiel eines Temperatursensors nach der Erfindung, der an seiner Oberseite mit zwei Kontaktzonen 21 und 22 versehen ist und bei dem die Oberflächenzone 41 vom entgegengesetzten Leitungstyp durch eine auf die Oberfläche des Halbleiterkörpers 1 aufgebrachte p+-leitende epitaktische Schicht gebildet wird.

Das Verfahren zur Herstellung eines solchen Zweiloch-Temperatursensors entspricht mit Ausnahme des Anbringens der Oberflächenzone 41 dem oben anhand der Figur 1 beschriebenen Verfahren. Die epitaktische Schicht 41 wird durch eine Ätzbehandlung, die gleichzeitig zum Freilegen der Ritzbahnen auf der Halbleiterscheibe dient so verkleinert, daß später nach dem Zerteilen der Scheibe auf einem Halbleiterkörper von 500x500μm Kantenlänge jeweils eine epitaktische Schicht von etwa 430x430μm Kantenlänge liegt.

Auf die gleiche Weise kann auch die eindiffundierte Oberflächenzone 4 bei dem Ausführungsbeispiel nach Figur 1 so abgetragen werden, daß sie sich nicht bis zum Rand des Halbleiterkörpers erstreckt.

Selbstverständlich läßt sich bei dem Einlochsensor nach Figur 1 als Oberflächenzone auch eine epitaktisch aufgebrachte Schicht verwenden und bei dem Zweilochsensor nach Figur 2 eine eindiffundierte Oberflächenzone.

Die Isolierschicht auf der Oberfläche des Halbleiterkörpers kann statt aus Siliciumoxid auch aus Siliciumnitrid bestehen.

## Ansprüche

1. Temperatursensor in Form eines temperaturabhängigen, nach dem Stromausbreitungsprinzip arbeitenden Halbleiterwiderstandes mit einem Halbleiterkörper (1) vom einen Leitungstyp aus Silicium, der an seiner Unterseite mit einer gut leitenden Schicht und an seiner mit einer Siliciumoxidschicht oder Siliciumnitridschicht bedeckten Oberseite mit mindestens einer Kontaktzone vom einen Leitungstyp versehen ist, dadurch gekennzeichnet, daß der Halbleiterkörper (1) an seiner der Siliciumoxidschicht bzw. der Siliciumnitridschicht (5) benachbarten Oberfläche mit einer Oberflächenzone (4;41) vom anderen, entgegengesetzten Leitungstyp versehen ist.

2. Temperatursensor nach Anspruch 1, dadurch gekennzeichnet, daß die Oberflächenzone (4) durch Diffusion im Halbleiterkörper (1) gebildet ist.

3. Temperatursensor nach Anspruch 1, dadurch gekennzeichnet, daß die Oberflächenzone (41) durch eine epitaktisch auf den Halbleiterkörper (1) aufgebrachte Schicht gebildet ist.

4. Temperatursensor nach Anspruch 2 oder 3, dadurch gekennzeichnet, daß sich die Oberflächenzone (41) nicht bis zum Rand des Halbleiterkörpers (1) erstreckt.

## Claims

1. A temperature sensor in the form of a temperature-dependent semiconductor resistor operating according to the current-spreading principle comprising a silicon semiconductor body (1) of one conductivity type, which is provided on tis lower side with a good conducting layer and is provided ontis upper side coated with a silicon oxide layer of a silicon nitride layer with at least one contact zone of the said conductivity type, characterized in that hte semiconductor body (1) is provided with a surface zone (4, 41) of the other, opposite conductivity type at its surface adjacent the silicon oxide or silicon nitride layer (5).

2. A temperature sensor as claimed in Claim 1, characterized in that the surface zone (4) is formed by diffusion in the semiconductor body (1).

3. A temperature sensor as claimed in Claim 1, characterized in that the surface zone (41) is formed by a layer apllied epitaxially to the semiconductor body (1).

4. A temperature sensor as claimed in Claim 2 or 3, characterized in that the surface zone (41) does not extend the edge of the semiconductor body (1).


**Revendications**

1. Capteur de température réalisé sous la forme d'une résistance semiconductrice dépendant de la température et fonctionnant selon le principe d'extension de courant, comportant un corps semiconducteur (1) de silicium d'un premier type de conductivité qui, sur sa face inférieure, présente une couche bien conductrice et, sur sa face supérieure, recouverte d'une couche d'oxyde de silicium ou d'une couche de nitrure de silicium, présente au moins une zone de contact d'un premier type de conductivité, caractérisé en ce que le corps semiconducteur (1), sur sa surface contiguë à la couche d'oxyde de silicium ou de nitrure de silicium (5), présente une zone superficielle (4; 41) de l'autre type de conductivité, opposé au premier.

2. Capteur de température selon la revendication 1, caractérisé en ce que la zone superficielle (4) est formée par diffusion dans le corps semiconducteur (1).

3. Capteur de température selon la revendication 1, caractérisé en ce que la zone superficielle (41) est constituée par une couche formée par dépôt épitaxiale sur le corps semiconducteur (1).

4. Capteur de température selon la revendication 2 ou 3, caractérisé en ce que la zone superficielle (41) ne s'étend pas jusqu'au bord du corps semiconducteur (1).

FIG.1

FIG.2